# EUROPEAN PATENT APPLICATION

(11) **EP 1 813 316 A1**
(43) Date of publication of application: **01.08.2007**
(21) Application number: 06001976.7
(22) Date of filing: 31.01.2006
(51) Int. Cl.: A63B 22/02, B65G 15/34

(54) **Endless belt for exercise treadmill**

(71) Applicant: Kuo, Hai-Pin, Tainan City (TW)
(72) Inventor: Kuo, Hai-Pin, Tainan City (TW)
(74) Representative: Casalonga, Axel

(57) **Abstract**

A belt device includes an outer peripheral layer having one or more conductive wires engaged in the inner portion for eliminating static electricity. The outer peripheral layer includes a number of longitudinal fibers arranged parallel to the conductive wire, or a number of lateral fibers arranged parallel to the conductive wire. An inner peripheral layer may be engaged with the outer peripheral layer. The inner peripheral layer also includes one or more conductive wires for eliminating static electricity, and includes a number of longitudinal fibers arranged parallel to the conductive wire or a number of lateral fibers arranged parallel to the conductive wire.

## Description

The present invention relates to an endless belt device for an exercise treadmill, and more particularly to an endless belt device for an exercise treadmill having a structure for reducing or eliminating static electricity.

### 2. Description of the Prior Art

Typical exercise treadmill comprise an endless belt device disposed on rollers to present a walking surface in an inclined plane for supporting a user thereon and for allowing the user to conduct walking or jogging exercises or the like.

For example, U.S. Patent No. 3,554,541 to Seaman discloses one of the typical exercise treadmills of the type used in gymnasiums, health clubs, and sanitaria to provide a controlled form of exercise within a confined indoor space, and the typical exercise treadmill also comprises an endless belt device disposed on a relatively large number of rollers that are disposed transversely in a supporting frame, for forming a walking surface in an inclined plane and for supporting a user thereon and for allowing the user to conduct various exercises.

Recently, electrical facilities are attached to the exercise treadmills for sensing or detecting or measuring the rotational or moving speed of the endless belt, and/or various information of the exercisers, such as the breath, the heart beat, or other health or body condition of the exercisers,

For example, U.S. Patent No. 4,998,725 to Watterson et al. discloses one of the typical exercise treadmills having a microprocessor to generate signals and to control the exerciser, and to regulate the heart rate of the user by varying the resistance to the exercise.

However, the endless belt of the typical exercise treadmills are normally made of polymer materials, such as polyester, and may generate static electricity when the endless belt is moved or rotated around the rollers, and the static electricity may affect the sensing or detecting or measuring the rotational or moving speed of the endless belt or of the information of the exercisers.

The present invention has arisen to mitigate and/or obviate the afore-described disadvantages of the conventional belt devices for exercise treadmills.

The primary objective of the present invention is to provide an endless belt device for attaching to an exercise treadmill and including a structure for reducing or eliminating static electricity and for allowing various information to be effectively sensed or detected or measured by the electrical facilities.

The other objective of the present invention is to provide an endless belt device having a charcoal or carbon outer covering layer for further reducing or eliminating static electricity.

In accordance with one aspect of the invention, there is provided a belt device comprising an outer peripheral layer including at least one conductive wire engaged therein for eliminating static electricity and for allowing various information to be effectively sensed or detected or measured by the electrical facilities.

The outer peripheral layer includes a plurality of longitudinal fibers arranged parallel to the conductive wire. The outer peripheral layer includes a plurality of lateral fibers arranged parallel to the conductive wire. The outer peripheral layer may further include an outer covering layer made of carbon material.

An inner peripheral layer may further be provided and engaged with the outer peripheral layer. One or more intermediate layers may further be provided and disposed between the inner and the outer peripheral layers.

The inner peripheral layer may also include at least one conductive wire engaged therein for eliminating static electricity, and includes a plurality of longitudinal fibers arranged parallel to the conductive wire and/or a plurality of lateral fibers arranged parallel to the conductive wire.

Further objectives and advantages of the present invention will become apparent from a careful reading of the detailed description provided hereinbelow, with appropriate reference to the accompanying drawings.
FIG. 1 is a partial upper plan schematic view of an endless belt device in accordance with the present invention;
FIG. 2 is a partial side or end plan schematic view of the endless belt device,
FIG. 3 is an enlarged partial cross sectional view of the endless belt device;
FIG. 4 is an enlarged partial cross sectional view illustrating an upper or outer layer of the endless belt device;
FIG. 5 is an enlarged partial cross sectional view similar to FIG. 4, illustrating the other arrangement of the endless belt device; and
FIG. 6 is an enlarged partial cross sectional view similar to FIGS. 4 and 5, illustrating the further arrangement of the endless belt device.

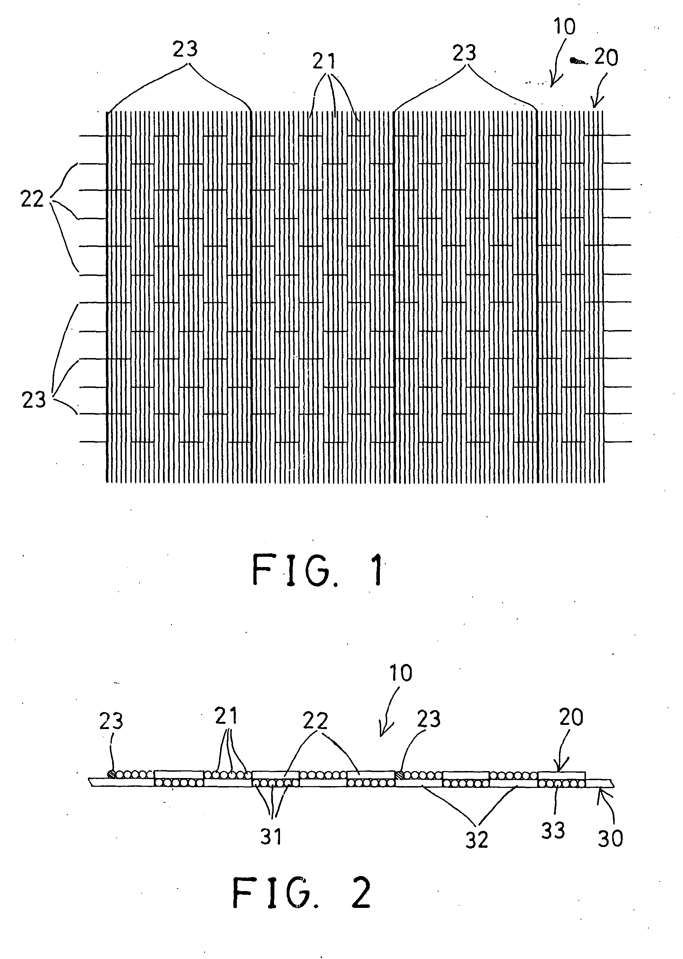

Referring to the drawings, and initially to FIGS. 1-3, an endless belt device 10 in accordance with the present invention is provided or arranged for attaching to an exercise treadmill (not shown) of the type used in gymnasiums, health clubs, and sanitaria to provide a controlled form of exercise within a confined indoor space, and the endless belt device is disposed on a relatively large number of rollers that are disposed transversely in a supporting frame of the exercise treadmill, for forming a walking surface in an inclined plane and for supporting a user thereon and for allowing the user to conduct various exercises.

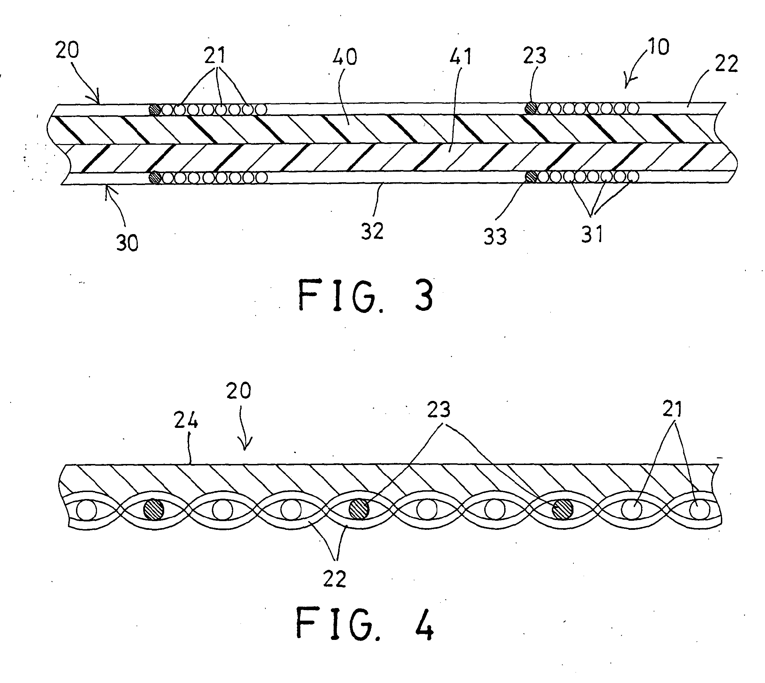

The endless belt device 10 comprises an upper or outer peripheral layer 20 (FIGS. 1-3), and a lower or inner peripheral layer 30 (FIGS. 2-3), and/or one or more insert or intermediate layers 40, 41 (FIG. 3) disposed or engaged between the outer and the inner peripheral layers 20, 30. The outer peripheral layer 20 includes a number of longitudinal threads or fibers 21 and a number of lateral threads or fibers 22 alternatively interwoven together or engaged with each other to form an outer peripheral layer 20 of a woven or non-woven cloth type or structure. The intermediate layers 40, 41 are preferably made of plastic or polymer or synthetic fibers, such as polyvinyl chloride, or the like.

The inner peripheral layer 30 also includes a number of longitudinal threads or fibers 31 and a number of lateral threads or fibers 32 alternatively interwoven together to form an inner peripheral layer 30 of a woven or non-woven cloth type or structure. The longitudinal threads or fibers 21, 31 and the lateral threads or fibers 22, 32 of the outer and the inner peripheral layers 20, 30 may be made of various natural fiber materials, such as natural plant fibers, or plastic or polymer or synthetic fibers, such as polyester, etc.

The outer and the inner peripheral layers 20, 30 each further includes one or more conductive metallic cables or wires 23, 33 interwoven in either or both of the longitudinal threads or fibers 21, 31 and the lateral threads or fibers 22, 32. For example, the outer peripheral layer 20 may include one or more conductive metallic cables or wires 23 interwoven in and/or parallel to the longitudinal threads or fibers 21 and/or in the lateral threads or fibers 22, and the inner peripheral layer 30 may also include one or more conductive metallic cables or wires 33 interwoven in and/or parallel to the longitudinal threads or fibers 31 and/or in the lateral threads or fibers 32.

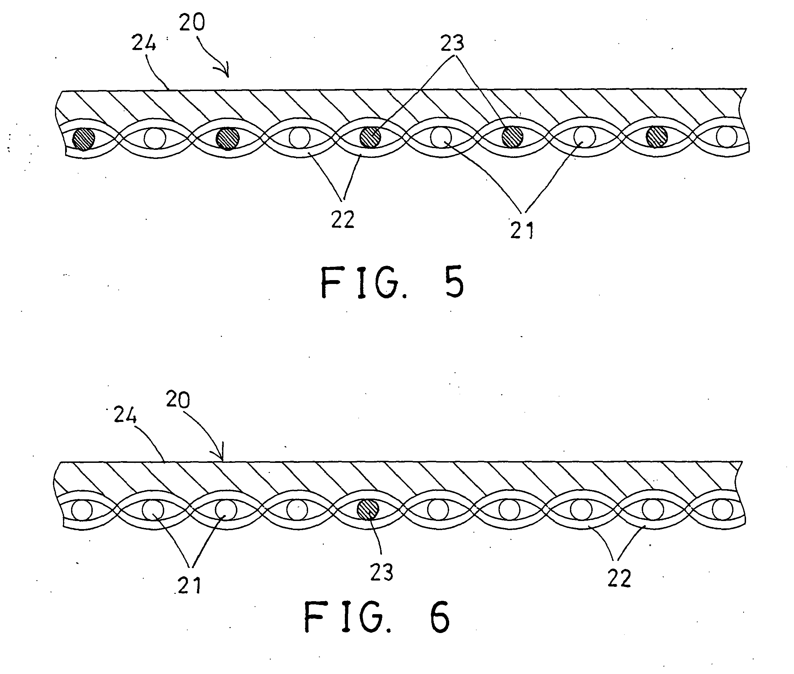

The interwoven conductive metallic cables or wires 23, 33 of the outer and the inner peripheral layers 20, 30 may be electrically contacted with each other and may be used or provided for reducing or eliminating static electricity and for allowing various information to be effectively sensed or detected or measured by the electrical facilities. As shown in FIGS. 4-6, the outer peripheral layer 20 may further include an outer covering layer 24 which is preferably made of charcoal or carbon materials for further reducing or eliminating static electricity.

In operation, the endless belt device may be rotated or moved in a relatively large moving speed relative to the supporting rollers, and a friction or rubbing or abrasion may be generated between the endless belt device and the supporting rollers, and thus a static electricity may be generated by the friction or rubbing or abrasion between the endless belt device and the supporting rollers. The interwoven conductive metallic cables or wires 23, 33 of the outer and the inner peripheral layers 20, 30 and/or the outer covering layer 24 of the outer peripheral layer 20 may be used to suitably reduce or eliminate the static electricity.

Accordingly, the endless belt device for the exercise treadmill in accordance with the present invention includes a structure for reducing or eliminating static electricity and for allowing various information to be effectively sensed or detected or measured by the electrical facilities.

Although this invention has been described with a certain degree of particularity, it is to be understood that the present disclosure has been made by way of example only and that numerous changes in the detailed construction and the combination and arrangement of parts may be resorted to without departing from the spirit and scope of the invention as hereinafter claimed.

## Claims

1. A belt device comprising:
an outer peripheral layer including at least one conductive wire engaged therein for eliminating static electricity.

2. The belt device as claimed in claim 1, wherein said outer peripheral layer includes a plurality of longitudinal fibers arranged parallel to said at least one conductive wire.

3. The belt device as claimed in claim 1, wherein said outer peripheral layer includes a plurality of lateral fibers arranged parallel to said at least one conductive wire.

4. The belt device as claimed in claim 1, wherein said outer peripheral layer includes an outer covering layer made of carbon material.

5. The belt device as claimed in claim 1 further comprising an inner peripheral layer engaged with said outer peripheral layer.

6. The belt device as claimed in claim 5, wherein said inner peripheral layer includes at least one conductive wire engaged therein for eliminating static electricity.

7. The belt device as claimed in claim 6, wherein said inner peripheral layer includes a plurality of longitudinal fibers arranged parallel to said at least one conductive wire.

8. The belt device as claimed in claim 6, wherein said inner peripheral layer includes a plurality of lateral fibers arranged parallel to said at least one conductive wire.

9. The belt device as claimed in claim 5 further comprising at least one intermediate layer disposed between said inner and said outer peripheral layers.
